# EUROPÄISCHE PATENTSCHRIFT

(11) **EP 3 394 566 B1**
(45) Veröffentlichungstag und Bekanntmachung des Hinweises auf die Patenterteilung: **15.05.2019**
(21) Anmeldenummer: 17704433.6
(22) Anmeldetag: 07.02.2017
(51) Int. Cl.: G01C 21/20, G08G 1/005, B60Q 1/48, H04W 4/02, H04W 4/44

(54) **VERFAHREN ZUM AUFFINDEN EINES GEPARKTEN FAHRZEUGS IN EINER PARKSTRUKTUR UND PARKSTRUKTUR**
METHOD FOR LOCATING A PARKED VEHICLE IN A PARKING STRUCTURE AND PARKSTRUCTURE ADAPTED THEREFOR
MÉTHODE DE LOCALISATION D'UN VÉHICLE GARÉ DANS UN PARC DE STATIONNEMENT ET PARC DE STATIONNEMENT CORRESPONDANT

(30) Priorität: 27.02.2016 DE 102016002530
(43) Veröffentlichungstag der Anmeldung: 31.10.2018
(73) Patentinhaber: AUDI AG, 85045 Ingolstadt (DE)
(72) Erfinder: NEUMAYER, Thomas, 85055 Ingolstadt (DE)
(86) Internationale Anmeldenummer: PCT/EP2017/052612
(87) Internationale Veröffentlichungsnummer: WO 2017/144263

(56) Entgegenhaltungen:
- WO-A1-2009/122356
- WO-A1-2015/004581

## Beschreibung

Die vorliegende Erfindung betrifft ein Verfahren zum Auffinden eines geparkten Fahrzeugs in einer Parkstruktur, wobei das Verfahren folgende Schritte umfasst: Eine Parkposition des Fahrzeugs wird in einer Parkstruktur gespeichert. Ein mobiles Terminal wird zur Bereitstellung einer Funkübertragungsstrecke mit der Parkstruktur gekoppelt. Über das mobile Terminal wird bei der Parkstruktur eine Navigation zum geparkten Fahrzeug angefordert. Die ersten beiden Schritte können auch in umgekehrter Reihenfolge ausgeführt werden. Die Erfindung betrifft überdies eine Parkstruktur zum Auffinden eines geparkten Fahrzeugs in der Parkstruktur, die eine Speichervorrichtung zum Speichern einer Parkposition des Fahrzeugs umfasst und eine Kommunikationsschnittstelle, die ausgelegt ist, mit einem mobilen Terminal über eine Funkübertragungsstrecke zu kommunizieren.

Unter Parkstrukturen sind im Sinne der vorliegenden Erfindung insbesondere Parkplätze und Parkhäuser zu verstehen.

Ein gattungsgemäßes Verfahren zum Auffinden eines geparkten Fahrzeugs in einer Parkstruktur sowie eine gattungsgemäße Parkstruktur sind bekannt aus der US 2013/0103200 A1. Diese Druckschrift betrifft insbesondere ein Verfahren zum Lokalisieren eines in einem Parkhaus geparkten Fahrzeugs mittels Übertragung von erfassten Fahrzeug-Ortsinformationen an einen Parkhauszentralrechner. Dabei kann die Position des mobilen Endgeräts zum Zeitpunkt des Parkens des Fahrzeugs mit der Parkposition gleichgesetzt werden, wobei das mobile Endgerät diese Position an den Parkhauszentralrechner überträgt. Gemäß einer anderen Variante wird das Fahrzeug mit einem mobilen Endgerät assoziiert und das Fahrzeug überträgt die Parkposition an den Parkhauszentralrechner. Nach der Rückkehr des Benutzers zum Parkhaus wird über das mobile Endgerät beim Parkhauszentralrechner eine Navigation zum geparkten Fahrzeug angefordert. Dieser übermittelt daraufhin Navigationsanweisungen an das mobile Endgerät, welches dann beispielsweise über einen Touchscreen Führungsinformation für den Benutzer anzeigt, um den Benutzer zum Fahrzeug zu führen. Nachteilig an dieser Vorgehensweise ist der Umstand, dass zum erfolgreichen Auffinden des Fahrzeugs die auf dem mobilen Endgerät angezeigte Karte korrekt verstanden, interpretiert und ihre Information umgesetzt werden muss. Dazu ist ein räumliches Vorstellungsvermögen Voraussetzung, welches bei einem beachtlichen Anteil der Bevölkerung in diesem Umfang nicht gegeben ist. Nachteilig ist weiterhin, dass fortwährend eine Funkverbindung zwischen mobilem Endgerät und Parkhauszentralrechner sichergestellt werden muss, um eine auf die Fortbewegung des Benutzers abgestimmte Darstellung auf dem mobilen Endgerät anzuzeigen. In dieser Druckschrift wird weiterhin vorgeschlagen, Führungsinformation in Form von Satzanweisungen an den Benutzer bereitzustellen, beispielsweise "Gehe in die dritte Ebene" oder "Gehe 60 Fuß nach links". Auch bei der Umsetzung dieser Anweisungen können Fehler auftreten, insbesondere wenn sich der Benutzer in einem fremden Parkhaus befindet und er bei der Umsetzung der Anweisung abgelenkt wird oder er Orientierungsprobleme hat.

Aus der DE 199 23 750 A1 ist ebenfalls eine Vorrichtung und ein Verfahren zum Auffinden eines geparkten Fahrzeugs bekannt. Dabei wird die Position des Fahrzeugs beim Parken über ein Navigationssystem festgestellt und von dem Fahrzeug an ein mobiles Terminal übertragen und dort abgespeichert. Die übertragene Positionsinformation kann auf dem mobilen Terminal ausgelesen und auf einer Darstellungseinheit dargestellt werden. Dabei umfasst die Positionsinformation Straßennamen und Hausnummern, Koordinaten des Standorts oder eine Straßenkarte mit Standortanzeige. Eine Variante wird vorgeschlagen, bei der die Position des Fahrzeugs in einem Zwischenspeicher außerhalb des Fahrzeugs abgelegt wird. Auch diese Druckschrift weist die im Zusammenhang mit der US 2013/0103200 A1 angeführten Nachteile auf. Darüber hinaus ist zum Abspeichern einer Fahrzeugposition sowie zum Navigieren eines Benutzers zum abgestellten Fahrzeug ein funktionsfähiges Navigationssystem Voraussetzung. Für heutige Systeme bedeutet dies, dass die Voraussetzungen zum Funktionieren eines GPS-Systems (GPS=Global Positioning System) gegeben sein müssen. Dies ist insbesondere im Bereich von Parkhäusern und abgeschatteten Bereichen oftmals nicht gegeben, sodass die Einsatzmöglichkeiten begrenzt sind.

Die EP 1 234 735 A1 befasst sich mit dem Problem der Autosuche auf einem Parkplatz, auf dem nicht jeder Einzelparkplatz markiert ist. Dabei wird mittels eines portablen Endgeräts das Verlassen des Kraftfahrzeugs detektiert und die letzte Position erfasst. Auf dem portablen Endgerät wird dann zum Auffinden des Kraftfahrzeugs die Position als geografische Information angezeigt, zum Beispiel die kürzeste oder die schnellste Route zum Kraftfahrzeug. Auch diese Vorgehensweise weist die bereits im Zusammenhang mit der US 2013/0103200 A1 dargestellten Nachteile auf. Überdies ist ebenfalls, wie bereits im Zusammenhang mit der DE 199 23 750 A1 als nachteilig dargestellt, ein funktionierendes Navigationssystem Voraussetzung, beispielsweise ein GPS-System.

Aus der WO 2015 004581 A1 ist ein erfahren bekannt, das das Zuweisen einer Fahrzeugkennung zu einem Fahrzeug bei Eintritt des Fahrzeugs in einen Parkbereich umfasst, während der Parkbereich durch Lichtsensoren überwacht wird. Die Fahrzeugkennung wird einem der Lichtsensoren von einer Tracker-Rechenvorrichtung bereitgestellt, die zusätzlich von einem anderen der Lichtsensoren Informationen empfängt, die den Parkplatz des Fahrzeugs innerhalb des Parkbereichs angeben. Die Tracker-Rechenvorrichtung stellt auch dem Fahrzeugsbenutzer einen weg zurück zum Fahrzeug bereit.

Aus der DE 10 2009 031 019 A1 ist ein Verfahren zur Bereitstellung von personalisierten Navigationsinformationen zur Wegleitung bekannt, wobei einer Person eine eindeutige Identifizierungsinformation und eine Zielinformation zugeordnet wird und Sensoren die aktuelle Position dieser Person bestimmen. Zur Darstellung der personalisierten Navigationsinformationen werden Anzeigevorrichtungen auf einem Weg der Person in einem Fußboden integriert.

Die Aufgabe der vorliegenden Erfindung besteht deshalb darin, ein gattungsgemäßes Verfahren bzw. eine gattungsgemäße Parkstruktur derart weiterzubilden, dass ein möglichst zuverlässiges Auffinden eines geparkten Fahrzeugs in der Parkstruktur ermöglicht wird.

Diese Aufgabe wird gelöst durch ein Verfahren mit den Merkmalen von Patentanspruch 1 sowie durch eine Parkstruktur mit den Merkmalen von Patentanspruch 8.

Die vorliegende Erfindung basiert auf der Erkenntnis, dass ein besonders zuverlässiges Navigieren eines Benutzers zu seinem Fahrzeug ermöglicht wird, wenn Fehler bei der Umsetzung von Navigationshinweisen durch den Benutzer möglichst weitgehend ausgeschlossen werden. Aus diesem Grund scheinen die aus dem Stand der Technik auf einem mobilen Endgerät dargestellten Führungsanweisungen ungünstig zu sein. Die vorliegende Erfindung geht deshalb den Weg, die Führungsanweisungen in Form von von der Parkstruktur erzeugten Lichttrajektorien darzustellen, um einen Benutzer zu der Parkposition des Fahrzeugs zu navigieren. Unter Lichttrajektorien sind optische Führungshilfen für den Benutzer zu verstehen, die von der Parkstruktur erzeugt werden. Dabei handelt es sich beispielsweise um auf den Boden oder mindestens eine Wand der Parkstruktur projizierte optische Signale, beispielsweise stehende oder laufende Pfeile, Piktogramme, beispielsweise mit Darstellungen von in Bewegung befindlichen Personen, und dergleichen. Auf diese Weise wird die Möglichkeit bereitgestellt, den Benutzer Schritt für Schritt zu seinem Fahrzeug zu navigieren. Der Benutzer braucht nur den vor ihm projizierten Lichttrajektorien zu folgen, um, ohne selbst eine Karte oder Anweisungen lesen zu müssen, zu seinem Fahrzeug zu gelangen.

Da die Möglichkeit bereitgestellt werden kann, den Benutzer beim Verfolgen der Lichttrajektorien zu tracken, können diese an seine Fortbewegungsgeschwindigkeit angepasst werden. Ein Verlaufen ist damit nahezu ausgeschlossen. Dadurch ist sichergestellt, dass der Benutzer sein Fahrzeug in höchst zuverlässiger Weise wiederfindet. Selbst Personen, die ein geringes räumliches Vorstellungsvermögen haben, können auf diese Weise sicher zu ihrem Kraftfahrzeug gelotst werden.

Erfindungsgemäß werden in Schritt d) zur Erzeugung der Lichttrajektorien eine Vielzahl von Lichtquellen der Parkstruktur entsprechend angesteuert. Zu diesem Zweck können insbesondere Projektoren oder Scheinwerfer mit geeigneten Blendenvorsätzen und dergleichen verwendet werden. Erfindungsgemäß werden dabei die ohnehin zur Beleuchtung der Parkstruktur vorhandenen Lichtquellen so weitergebildet, dass sie auch zur Erzeugung der Lichttrajektorien im Rahmen des erfindungsgemäßen Verfahrens verwendet werden können. Dies ist deshalb in einfacher Weise möglich, da nur einzelne der vorhandenen Lichtquellen jeweils zum Erzeugen von Lichttrajektorien eingesetzt werden müssen, während die übrigen Lichtquellen weiterhin der Funktion der Beleuchtung der Parkstruktur dienen können. Dadurch ergibt sich eine besonders kostengünstige Umsetzung des erfindungsgemäßen Verfahrens.

Eine bevorzugte Ausführungsform zeichnet sich dadurch aus, dass in Schritt a) die Parkposition des Fahrzeugs durch das mobile Terminal ermittelt und an die Parkstruktur übertragen wird. Zu diesem Zweck kann das mobile Terminal ausgelegt sein, mit drahtlosen Sensoren der Parkstruktur zu kommunizieren. Beispielhaft seien hier Sensoren genannt, die ausgelegt sind, auf der Basis von WLAN oder Bluetooth mit dem mobilen Terminal zu kommunizieren. Alternativ kann die Parkposition bereits bei der Zuweisung der Zielparklücke für eine Parkpilot-Funktion in der Parkstruktur gespeichert werden.

Weiter alternativ kann das Fahrzeug die Parkposition gemeinsam mit der Parkhausstruktur bestimmen, beispielsweise unter Zuhilfenahme von Eigennavigation im Fahrzeug auf Basis von Beschleunigungen und so genannten Wheel-Ticks und Abgleich mit einer Karte der Parkstruktur. Das heißt, die Parkposition des Fahrzeugs wird durch das Fahrzeug übermittelt und vom Fahrzeug an die Parkstruktur oder vom Fahrzeug über das mobile Terminal an die Parkstruktur übermittelt.

Selbstverständlich kann, sofern es die Umstände ermöglichen, die Parkposition redundant durch ein Zusammenspiel von mobilem Terminal und/oder Fahrzeug und/oder Parkstruktur ermittelt werden.

Besonders vorteilhaft ist es, wenn die Parkstruktur ausgelegt ist, für unterschiedliche Benutzer unterschiedliche Lichttrajektorien zu erzeugen. Auf diese Weise können mehrere Benutzer gleichzeitig zu ihren Fahrzeugen navigiert werden, selbst wenn sich die Navigationswege kreuzen.

In diesem Zusammenhang ist es bevorzugt, wenn sich die Lichttrajektorien für unterschiedliche Benutzer durch unterschiedliche Lichtmuster und/oder durch unterschiedliche Farben voneinander unterscheiden. Werden als Lichtquellen LEDs verwendet, so ist es besonders einfach, mit ein und derselben Lichtquelle Lichttrajektorien mit unterschiedlichen Farben zu erzeugen, da üblicherweise zur Erzeugung von weißem Licht mehrere LEDs verwendet werden, die in unterschiedlichen Wellenlängenbereichen emittieren.

Eine bevorzugte Ausführungsform zeichnet sich dadurch aus, dass die Parkstruktur den Weg des Benutzers entlang der Lichttrajektorien mitverfolgt, insbesondere über mit dem mobilen Terminal kommunizierende Sensoren der Parkstruktur oder über Kamerasysteme der Parkstruktur, und die Erzeugung der Lichttrajektorien mit Bezug auf ihre örtliche Erstreckung an den momentanen Aufenthaltsort des Benutzers anpasst. Auf diese Weise kann die Gefahr einer Fehlnavigation weiter reduziert werden. Insbesondere lässt sich damit die Anzahl der gleichzeitig zu ihren Fahrzeugen zu navigierenden Benutzer weiter erhöhen.

In diesem Zusammenhang ist es von Vorteil, wenn die Erzeugung der Lichttrajektorien mit Bezug auf ihre örtliche Erstreckung dadurch an den momentanen Aufenthaltsort des Benutzers angepasst wird, dass die entsprechenden Lichttrajektorien nur in einem vorgebbaren Bereich um den Benutzer, insbesondere in einem zwischen 1 und 20 m vor dem Benutzer auf dem Weg zu dem geparkten Fahrzeug liegenden Bereich, erzeugt werden. Besonders bevorzugt ist ein Bereich zwischen 2 m und 5 m vor dem Benutzer.

Weitere bevorzugte Ausführungsformen ergeben sich aus den Unteransprüchen.

Die im Zusammenhang mit dem erfindungsgemäßen Verfahren erwähnten bevorzugten Ausführungsformen und deren Vorteile gelten entsprechend, soweit anwendbar, für eine erfindungsgemäße Parkstruktur zum Auffinden eines geparkten Fahrzeugs in der Parkstruktur. Die erfindungsgemäße Parkstruktur zeichnet sich dadurch aus, dass sie eine Vielzahl von Lichtquellen zur Erzeugung der Lichttrajektorien aufweist.

Im Nachfolgenden wird nunmehr ein Ausführungsbeispiel der vorliegenden Erfindung unter Bezugnahme auf die beigefügten Zeichnungen näher beschrieben. Diese zeigen:
- Fig. 1: in schematischer Darstellung ein Ausführungsbeispiel einer erfindungsgemäßen Parkstruktur, die mit einem Fahrzeug und einem mobilen Terminal zur Umsetzung des erfindungsgemäßen Verfahrens zusammenwirkt; und
- Fig. 2: einen Signalflussgraphen für ein Ausführungsbeispiel eines erfindungsgemäßen Verfahrens.

Die vorliegende Erfindung betrifft die Problematik des Wiederfindens eines in einer Parkstruktur abgestellten Fahrzeugs. Fahrzeuge werden meist an beliebigen Einzelparkplätzen in einer Parkstruktur abgestellt, wobei der Einzelparkplatz entweder durch den Fahrer ausgewählt oder der Fahrer pilotiert durch die Parkstruktur an einen bestimmten Einzelparkplatz dirigiert wird. Diese Parkposition muss sich der Fahrer merken, um sein Fahrzeug nach der Rückkehr zur Parkstruktur wiederzufinden.

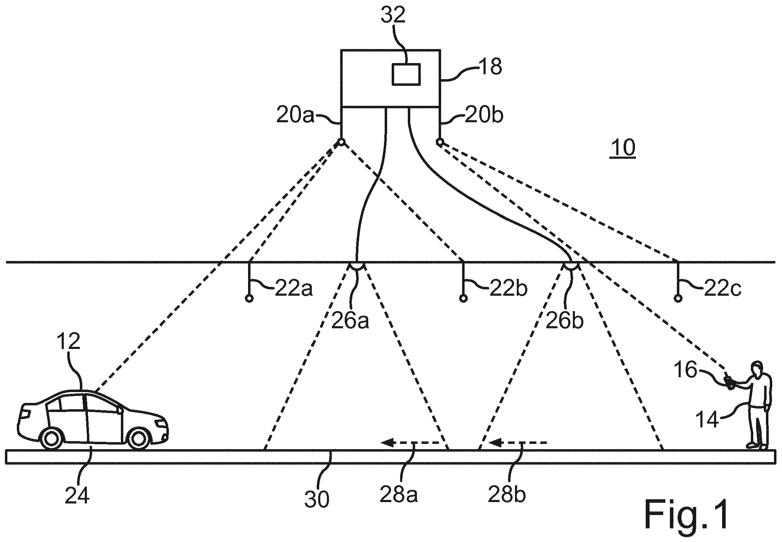

Fig. 1 zeigt in schematischer Darstellung ein Ausführungsbeispiel einer erfindungsgemäßen Parkstruktur 10 (im Beispiel ein Parkhaus), die mit einem Kraftfahrzeug 12 und einem von einem Benutzer 14 mitgeführten mobilen Terminal 16 zusammenwirkt. Bei dem mobilen Terminal 16 kann es sich beispielsweise um ein Smartphone, einen Tabletcomputer, einen PDA (Personal Digital Assistant), ein Laptop oder dergleichen handeln. Die Parkstruktur 10 umfasst eine Recheneinrichtung 18, beispielsweise einen Server, der mit drahtlosen Kommunikationsschnittstellen 20a, 20b gekoppelt ist, um mit dem Kraftfahrzeug 12 und dem mobilen Terminal 16 über eine drahtlose Funkübertragungsstrecke zu kommunizieren.

Es gibt unterschiedliche Möglichkeiten, die Parkposition des Kraftfahrzeugs 12 in einer in der Recheneinrichtung 18 der Parkstruktur 10 vorgesehenen Speichervorrichtung 32 zu speichern: Gemäß einer ersten Variante kann die Recheneinrichtung 18 dem Fahrer 14 beim Befahren der Parkstruktur 10 eine Parkposition vorgeben, beispielsweise durch die Nennung einer Parkplatznummer oder des Orts eines bestimmten Einzelparkplatzes 24. Die Recheneinrichtung 18 kann den Fahrer beim Suchen nach der vorgegebenen Parkposition durch Pilotieren unterstützen.

Gemäß einer anderen Variante sind in der Parkstruktur 10 drahtlose oder drahtgebundene Sensoren 22a bis 22c vorgesehen, die das Kraftfahrzeug 12 nach Befahren der Parkstruktur 10 tracken, bis dieses einen bestimmten Einzelparkplatz 24 erreicht hat und dort abgestellt wird. Die ermittelte Position des Einzelparkplatzes 24 wird dann von dem zuletzt befassten Sensor 22 drahtlos oder drahtgebunden an die zentrale Recheneinrichtung 18 übermittelt. Es kann jedoch auch vorgesehen sein, dass das Kraftfahrzeug 12 ausgehend von einer fixen Position beim Befahren der Parkstruktur 10, beispielsweise der Einfahrtschranke, auf der Basis von Beschleunigungen und so genannten Wheel-Ticks und Abgleich mit einer zuvor geladenen Karte der Parkstruktur 10 die Position des Einzelparkplatzes 24 ermittelt, auf dem das Kraftfahrzeug 12 schließlich abgestellt wird.

Das Kraftfahrzeug 12 kann dann die ermittelte Position über eine bordeigene Kommunikationsschnittstelle, beispielsweise WLAN oder Bluetooth, drahtlos über einen Sensor 20 an die Recheneinrichtung 18 übermitteln. Alternativ kann die vom Kraftfahrzeug 12 wie zuletzt beschrieben ermittelte Position an das im Kraftfahrzeug 12 vom Benutzer 14 mitgeführte mobile Terminal 16 übermittelt werden, wobei dann das mobile Terminal 16 die Position des Einzelparkplatzes 24, auf dem das Kraftfahrzeug 12 abgestellt ist, über einen Sensor 20 an die Recheneinrichtung 18 übermittelt. Weiter alternativ kann das mobile Terminal 16 mit den Sensoren 22 kommunizieren und dadurch die Position des Einzelparkplatzes 24, auf dem das Kraftfahrzeug 12 abgestellt wurde, ermitteln und anschließend über einen Sensor 20 an die Recheneinrichtung 18 übermitteln.

In der Recheneinrichtung 18 wird weiterhin eine Zuordnung der Position des Einzelparkplatzes 24, auf dem das Kraftfahrzeug 12 abgestellt ist, zu dem mobilen Terminal 16 des Benutzers 14 vorgenommen. Alternativ kann das Kennzeichen des Kraftfahrzeugs der Position des Einzelparkplatzes 24 zugeordnet werden.

Nachdem die Position des Einzelparkplatzes 24, auf dem das Kraftfahrzeug 12 - auf welchem Weg auch immer - abgestellt wurde, in der Recheneinrichtung 18 der Parkstruktur 10 gespeichert wurde, kann der Benutzer 14 die Parkstruktur 10 verlassen.

Nach der Rückkehr des Benutzers 14 zur Parkstruktur 10 wird das mobile Terminal 16 zur Bereitstellung einer Funkübertragungsstrecke über einen Sensor 20 mit der Recheneinrichtung 18 der Parkstruktur 10 gekoppelt, beispielsweise online via Audi Backend. Anschließend fordert der Benutzer 14 über das mobile Terminal 16, beispielsweise über eine der Parkstruktur 10 zugeordnete App, eine Navigation zum geparkten Kraftfahrzeug 12 an. Aufgrund der zuvor vorgenommenen Zuordnung des mobilen Terminals 16 des Benutzers 14 auf der einen Seite und der Position des Einzelparkplatzes 24, auf dem das Kraftfahrzeug 12 abgestellt ist auf der anderen Seite, kann die Recheneinrichtung 18 gemäß bekannter Algorithmen, beispielsweise Google Maps, insbesondere den kürzesten oder schnellsten Weg von der augenblicklichen Position des Benutzers 14 zum Einzelparkplatz 24, auf dem das Kraftfahrzeug 12 abgestellt ist, ermitteln. Alternativ gibt der Benutzer 14 das Kennzeichen des Kraftfahrzeugs 12 zur Übertragung an die Recheneinrichtung 18 in sein mobiles Terminal 16 ein. Die Recheneinrichtung 18 kann dann aufgrund der zuvor gemachten Zuordnung Kennzeichen - Einzelparkplatz 24 die Navigation starten.
Die aktuelle Position des Benutzers 14 kann ermittelt werden durch Tracken mittels der Sensoren 22 des Benutzers 14 selbst oder indem das Funksignal des mobilen Terminals 16 von unterschiedlichen Sensoren 22 ausgewertet wird und die aktuelle Position des Benutzers 14 der Position des Sensors 22 zugeordnet wird, der das stärkste Signal empfängt. Alternativ kann auch vorgesehen sein, dass der Benutzer 14 an einer vorgebbaren Position der Parkstruktur 10 aufgefordert wird, eine Navigation zu dem Einzelparkplatz 24 anzufordern, wobei der Ort dieser Aufforderung als Startpunkt der Navigation verwendet wird.

Die Recheneinrichtung 18 erzeugt daraufhin Steuersignale zur Ansteuerung von Lichtquellen 26a, 26b der Parkstruktur 10 derart, dass dadurch Lichttrajektorien 28a, 28b erzeugt werden, um den Benutzer 14 zur Position des Einzelparkplatzes 24 zu navigieren. Zu diesem Zweck umfasst die Parkstruktur 10 eine Vielzahl von Lichtquellen 26, die dann entsprechend angesteuert werden. Mit umfasst ist auch die Situation, bei der die Ausgangsposition des Benutzers 14 in einer anderen Ebene der Parkstruktur 10 liegt als die Position des Einzelparkplatzes 24. In diesem Fall wird der Benutzer 14 mittels Lichttrajektorien 28 zu einem Lift geleitet, wobei der Lift von der Recheneinheit 18 angesteuert werden kann. Wird demnach durch einen im Lift angeordneten Sensor 22 erkannt, dass der Benutzer 14 den Lift betreten hat, steuert die Recheneinrichtung 18 den Lift zu der Ebene der Parkstruktur 10, auf der sich der Einzelparkplatz 24 befindet.

Die Recheneinrichtung 18 ist ausgelegt, die Lichtquellen 26 derart anzusteuern, dass sie für unterschiedliche Benutzer 14 unterschiedliche Lichttrajektorien 28 erzeugen. Diese können sich durch unterschiedliche Lichtmuster und/oder durch unterschiedliche Farben voneinander unterscheiden. Bevorzugt werden die Lichttrajektorien 28 auf den Boden 30 der Parkstruktur 10 projiziert, sie können jedoch auch an die Wände projiziert werden. Der Boden 30 ist deshalb bevorzugt, da in einer offenen Struktur nicht überall Seitenwände vorhanden sind. Die Lichtquellen 28 sind bevorzugt an Decken der Parkstruktur 10 angeordnet.

Die Parkstruktur 10 kann den Weg des Benutzers 14 entlang der Lichttrajektorien 28 mitverfolgen, insbesondere über Sensoren 22, die den Benutzer 14 tracken oder mit dem mobilen Terminal 16 kommunizieren. Dies ermöglicht, dass die Recheneinrichtung 18 die Erzeugung der Lichttrajektorien 28 mit Bezug auf ihre örtliche Erstreckung an den momentanen Aufenthaltsort des Benutzers 14 anpasst. In diesem Zusammenhang ist es bevorzugt, wenn die Lichttrajektorien 28 nur in einem vorgebbaren Bereich um den Benutzer 14, insbesondere in einem Bereich zwischen 1 m und 20 m, bevorzugt zwischen 2 m und 5 m, vor dem Benutzer 14 auf dem Weg zu dem geparkten Kraftfahrzeug 12 erzeugt werden.

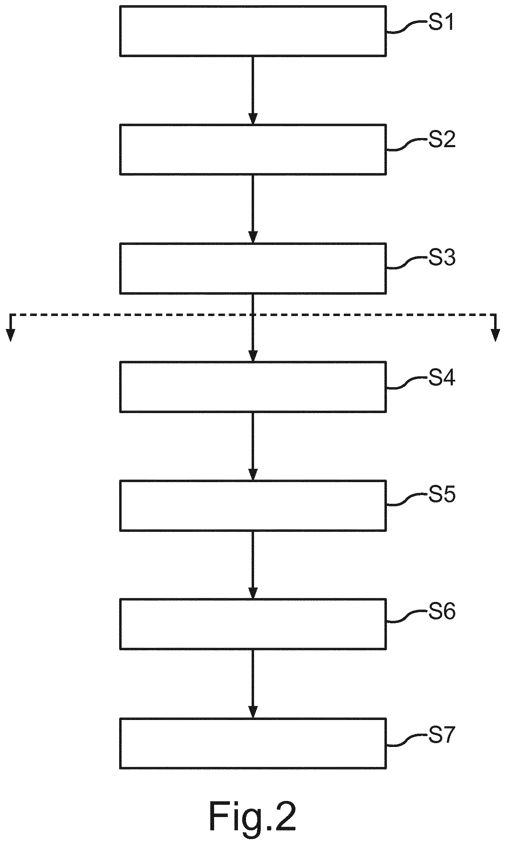

Fig. 2 zeigt in schematischer Darstellung den Ablauf eines Ausführungsbeispiels eines erfindungsgemäßen Verfahrens: Zunächst wird in Schritt S1 die Position des Einzelparkplatzes 24 des Kraftfahrzeugs 12 in der Parkstruktur 10 ermittelt. In diesem Ausführungsbeispiel ermittelt das Kraftfahrzeug 12 seine Position und überträgt diese drahtlos, beispielsweise über WLAN oder Bluetooth, an das mobile Terminal 16 des Benutzers 14.

Im Schritt S2 wird das mobile Terminal 16 des Benutzers 14 zur Bereitstellung einer Funkübertragungsstrecke über einen Sensor 20 mit der Recheneinrichtung 18 der Parkstruktur 10 gekoppelt. Über diese Funkübertragungsstrecke überträgt das mobile Terminal 16 die Position des Einzelparkplatzes 24, auf dem das Kraftfahrzeug 12 abgestellt ist, an die Recheneinrichtung 18, woraufhin diese im Schritt S3 dort gespeichert wird.

Nach der Rückkehr des Benutzers 14 zur Parkstruktur 10 werden die Schritte S4 bis S7 ausgeführt. Zunächst wird im Schritt S4 das mobile Terminal 16 wieder mit der Recheneinrichtung 18 der Parkstruktur 10 gekoppelt. Im Schritt S5 sendet das mobile Terminal 16 eine Anforderung an die Recheneinrichtung 18 der Parkstruktur 10 für eine Navigation zum geparkten Kraftfahrzeug 12. Im Schritt S6 erzeugt die Parkstruktur 10, insbesondere die Recheneinrichtung 18 durch entsprechende Ansteuerung der Lichtquellen 26, Lichttrajektorien 28, um den Benutzer 14 zu der Position des Einzelparkplatzes 24 zu navigieren. Das Verfahren endet im Schritt S7, wenn der Benutzer 14 das geparkte Kraftfahrzeug 12 erreicht.

## Patentansprüche

1. Verfahren zum Auffinden eines geparkten Fahrzeugs (12) in einer Parkstruktur (10), folgende Schritte umfassend:
a) eine Parkposition (24) des Fahrzeugs (12) wird in einer Parkstruktur (10) gespeichert (Schritt S3),
b) ein mobiles Terminal (16) wird zur Bereitstellung einer Funkübertragungsstrecke mit der Parkstruktur (10) gekoppelt (Schritt S2),
c) über das mobile Terminal (16) wird bei der Parkstruktur (10) eine Navigation zum geparkten Fahrzeug (12) angefordert (Schritt S5),
d) die Parkstruktur (10) erzeugt Lichttrajektorien (28), um einen Benutzer (14) zu der Parkposition (24) des Fahrzeugs (12) zu navigieren (Schritt S6), wobei zur Erzeugung der Lichttrajektorien (28) eine Vielzahl von Lichtquellen (26) der Parkstruktur (10) entsprechend angesteuert werden, wobei dabei die für eine Beleuchtung der Parkstruktur (10) vorhandenen Lichtquellen (26) so weitergebildet werden, dass sie zur Erzeugung der Lichttrajektorien (28) verwendbar sind,
**dadurch gekennzeichnet, dass**
die Parkstruktur (10) den Weg des Benutzers (14) entlang der Lichttrajektorien (28) mitverfolgt und die Erzeugung der Lichttrajektorien (28) mit Bezug auf ihre örtliche Erstreckung an den momentanen Aufenthaltsort des Benutzers (14) dadurch anpasst, dass die entsprechenden Lichttrajektorien (28) nur in einem vorgebbaren Bereich um den Benutzer (14) erzeugt werden.

2. Verfahren nach Anspruch 1,
**dadurch gekennzeichnet, dass**
in Schritt a) die Parkposition (24) des Fahrzeugs (12) durch das mobile Terminal (16) ermittelt wird und an die Parkstruktur (10) übertragen wird.

3. Verfahren nach Anspruch 1,
**dadurch gekennzeichnet, dass**
in Schritt a) die Parkposition (24) des Fahrzeugs (12) durch das Fahrzeug (12) ermittelt wird (Schritt S1) und vom Fahrzeug (12) an die Parkstruktur (10) oder vom Fahrzeug (12) über das mobile Terminal (16) an die Parkstruktur (10) übermittelt wird.

4. Verfahren nach einem der vorhergehenden Ansprüche,
**dadurch gekennzeichnet, dass**
die Parkstruktur (10) für unterschiedliche Benutzer (14) unterschiedliche Lichttrajektorien (28) erzeugt.

5. Verfahren nach Anspruch 4,
**dadurch gekennzeichnet, dass**
sich die Lichttrajektorien (28) für unterschiedliche Benutzer (14) durch unterschiedliche Lichtmuster und/oder durch unterschiedliche Farben voneinander unterscheiden.

6. Verfahren nach einem der vorhergehenden Ansprüche,
**dadurch gekennzeichnet, dass**
die Parkstruktur (10) den Weg des Benutzers (14) entlang der Lichttrajektorien (28) über mit dem mobilen Terminal (16) kommunizierende Sensoren (22) der Parkstruktur (10) mitverfolgt.

7. Verfahren nach einem der vorhergehenden Ansprüche,
**dadurch gekennzeichnet, dass**
die Erzeugung der Lichttrajektorien (28) mit Bezug auf ihre örtliche Erstreckung dadurch an den momentanen Aufenthaltsort des Benutzers (14) angepasst wird, dass die entsprechenden Lichttrajektorien (28) nur in einem zwischen 1 m und 20 m vor dem Benutzer auf dem Weg zu dem geparkten Fahrzeug (12) liegenden Bereich erzeugt werden.

8. Parkstruktur (10) zum Auffinden eines geparkten Fahrzeugs (12) in der Parkstruktur (10), umfassend:
- eine Speichervorrichtung (32) zum Speichern einer Parkposition (24) des Fahrzeugs (12), und
- eine Kommunikationsschnittstelle (20a, 20b), die ausgelegt ist, mit einem mobilen Terminal (16) über eine Funkübertragungsstrecke zu kommunizieren,
wobei die Parkstruktur (10) ausgelegt ist, nach Anforderung über die Kommunikationsschnittstelle (20a, 20b) einer Navigation zum geparkten Fahrzeug (12) Lichttrajektorien (28) derart zu erzeugen, dass ein Benutzer (14) zu der Parkposition (24) des Fahrzeugs (12) navigiert wird, wobei die Parkstruktur (10) eine Vielzahl von Lichtquellen (26) zur Erzeugung der Lichttrajektorien (28) aufweist, wobei die für eine Beleuchtung der Parkstruktur (10) vorhandenen Lichtquellen (26) so weitergebildet sind, dass sie zur Erzeugung der Lichttrajektorien (28) verwendbar sind,
**dadurch gekennzeichnet, dass**
die Parkstruktur (10) dazu ausgelegt ist, den Weg des Benutzers (14) entlang der Lichttrajektorien (28) mitzuverfolgen und die Erzeugung der Lichttrajektorien (28) mit Bezug auf ihre örtliche Erstreckung an den momentanen Aufenthaltsort des Benutzers (14) dadurch anzupassen, dass die entsprechenden Lichttrajektorien (28) nur in einem vorgebbaren Bereich um den Benutzer (14) erzeugt werden.

## Claims

1. Method for locating a parked vehicle (12) in a parking structure (10), comprising following steps:
a) a park position (24) of the vehicle (12) is stored (step S3) in a parking structure (10),
b) a mobile terminal (16) is coupled (step S2) with the parking structure (10) in order to provide a radio transmission link,
c) via the mobile terminal (16), at the parking structure (10) a navigation to the parked vehicle (12) is requested (step S5),
d) the parking structure (10) generates light trajectories (28), in order to navigate (step S6) a user (14) to the park position (24) of the vehicle (12), wherein for generating the light trajectories (28) a plurality of light sources (26) of the parking structure (10) are appropriately controlled, wherein in this case the light sources (26) present for an illumination of the parking structure (10) are further developed such that they can be used for generating the light trajectories (28),
**characterised in that**
the parking structure (10) accompanies the path of the user (14) along the light trajectories (28) and the generation of the light trajectories (28) with respect to its local extension adjusts to the current location of the user (14) **in that** the corresponding light trajectories (28) are generated only in a predeterminable area around the user (14).

2. Method according to claim 1,
**characterised in that**
in step a) the park position (24) of the vehicle (12) is determined by the mobile terminal (16) and transmitted to the parking structure (10).

3. Method according to claim 1,
**characterised in that**
in step a) the park position (24) of the vehicle (12) is determined (step S1) by the vehicle (12) and communicated from the vehicle (12) to the parking structure (10) or from the vehicle (12) via the mobile terminal (16) to the parking structure (10).

4. Method according to any of the preceding claims,
**characterised in that**
the parking structure (10) generates for different users (14) different light trajectories (28).

5. Method according to claim 4,
**characterised in that**
the light trajectories (28) differ from one another for different users (14) by means of different light patterns and/or by means of different colours.

6. Method according to any of the preceding claims,
**characterised in that**
the parking structure (10) accompanies the path of the user (14) along the light trajectories (28) via sensors (22) of the parking structure (10), said sensors communicating with the mobile terminal (16).

7. Method according to any of the preceding claims,
**characterised in that**
the generation of the light trajectories (28) with respect to their local extension is adapted to the current location of the user (14) **in that** the corresponding light trajectories (28) are generated only in an area lying between 1 m and 20 m in front of the user on the path to the parked vehicle (12).

8. Parking structure (10) for finding a parked vehicle (12) in the parking structure (10), comprising:
- a storage device (32) for storing a parked position (24) of the vehicle (12), and
- a communication interface (20a, 20b) which is configured to communicate with a mobile terminal (16) via a radio transmission link,
wherein the parking structure (10) is configured, after a request via the communication interface (20a, 20b) for a navigation to the parked vehicle (12), to generate light trajectories (28) such that a user (14) is navigated to the park position (24) of the vehicle (12), wherein the parking structure (10) has a plurality of light sources (26) for generating the light trajectories (28), wherein the light sources (26) present for an illumination of the parking structure (10) are developed such that they are able to be used for generating the light trajectories (28),
**characterised in that**
the parking structure (10) is configured to accompany the path of the user (14) along the light trajectories (28) and to adapt the generation of the light trajectories (28) in relation to their local extension to the current location of the user (14) **in that** the corresponding light trajectories (28) are generated only in a predeterminable area around the user (14).

## Revendications

1. Procédé de localisation d'un véhicule en stationnement (12) dans une structure de stationnement (10), comprenant les étapes suivantes :
a) une position de stationnement (24) du véhicule (12) est enregistrée dans une structure de stationnement (10) (étape S3),
b) un terminal mobile (16) est accouplé pour la mise à disposition d'une liaison de transmission radio à la structure de stationnement (10) (étape S2),
c) un guidage jusqu'au véhicule en stationnement (12) est demandé par le biais du terminal mobile (16) à la structure de stationnement (10) (étape S5),
d) la structure de stationnement (10) génère des trajectoires de lumière (28) afin de guider un utilisateur (14) jusqu'à la position de stationnement (24) du véhicule (12) (étape S6), dans lequel pour la génération des trajectoires de lumière (28) une pluralité de sources de lumière (26) est commandée selon la structure de stationnement (10), dans lequel les sources de lumière (26) présentes pour un éclairage de la structure de stationnement (10) sont perfectionnées de sorte qu'elles soient utilisables pour la génération des trajectoires de lumière (28),
**caractérisé en ce que**
la structure de stationnement (10) poursuit la course de l'utilisateur (14) le long des trajectoires de lumière (28) et adapte la génération des trajectoires de lumière (28) en ce qui concerne leur étendue locale au lieu de séjour momentané de l'utilisateur (14) du fait que les trajectoires de lumière (28) correspondantes sont générées uniquement dans une zone prescriptible autour de l'utilisateur (14).

2. Procédé selon la revendication 1,
**caractérisé en ce que**
à l'étape a) la position de stationnement (24) du véhicule (12) est déterminée par le terminal mobile (16) et est transmise à la structure de stationnement (10).

3. Procédé selon la revendication 1,
**caractérisé en ce que**
à l'étape a) la position de stationnement (24) du véhicule (12) est déterminée par le véhicule (12) (étape S1) et est transmise du véhicule (12) à la structure de stationnement (10) ou du véhicule (12) par le biais du terminal mobile (16) à la structure de stationnement (10).

4. Procédé selon l'une quelconque des revendications précédentes,
**caractérisé en ce que**
la structure de stationnement (10) pour différents utilisateurs (14) génère différentes trajectoires de lumière (28).

5. Procédé selon la revendication 4,
**caractérisé en ce que**
les trajectoires de lumière (28) pour différents utilisateurs (14) se distinguent par différents modèles de lumière et/ou par différentes couleurs les unes des autres.

6. Procédé selon l'une quelconque des revendications précédentes,
**caractérisé en ce que**
la structure de stationnement (10) poursuit la course de l'utilisateur (14) le long des trajectoires de lumière (28) par le biais de capteurs (22) communiquant avec le terminal mobile (16) de la structure de stationnement (10).

7. Procédé selon l'une quelconque des revendications précédentes,
**caractérisé en ce que**
la génération des trajectoires de lumière (28) est adaptée en ce qui concerne leur étendue locale au lieu de séjour momentané de l'utilisateur (14) du fait que les trajectoires de lumière (28) correspondantes soient générées uniquement dans une zone se trouvant entre 1 m et 20 m avant l'utilisateur sur le chemin jusqu'au véhicule en stationnement (12).

8. Structure de stationnement (10) pour la localisation d'un véhicule en stationnement (12) dans la structure de stationnement (10), comprenant : **caractérisée en ce que**
- un dispositif d'enregistrement (32) pour l'enregistrement d'une position de stationnement (24) du véhicule (12), et
- une interface de communication (20a, 20b) qui est conçue afin de communiquer avec un terminal mobile (16) par le biais d'une liaison de transmission radio,
dans laquelle la structure de stationnement (10) est conçue afin de générer après une demande par le biais de l'interface de communication (20a, 20b) d'un guidage jusqu'au véhicule en stationnement (12) des trajectoires de lumière (28) de telle manière qu'un utilisateur (14) soit guidé jusqu'à la position de stationnement (24) du véhicule (12), dans laquelle la structure de stationnement (10) présente une pluralité de sources de lumière (26) pour la génération des trajectoires de lumière (28), dans laquelle les sources de lumière (26) présentes pour un éclairage de la structure de stationnement (10) sont perfectionnées de sorte qu'elles soient utilisables pour la génération des trajectoires de lumière (28),
**caractérisée en ce que**
la structure de stationnement (10) est conçue afin de poursuivre la course de l'utilisateur (14) le long des trajectoires de lumière (28) et d'adapter la génération des trajectoires de lumière (28) en ce qui concerne leur étendue locale au lieu de séjour momentané de l'utilisateur (14) du fait que les trajectoires de lumière (28) correspondantes soient générées uniquement dans une zone prescriptible autour de l'utilisateur (14).
